# EUROPÄISCHE PATENTSCHRIFT

(11) **EP 1 330 343 B1**
(45) Veröffentlichungstag und Bekanntmachung des Hinweises auf die Patenterteilung: **02.02.2005**
(21) Anmeldenummer: 01273294.7
(22) Anmeldetag: 02.11.2001
(51) Int. Cl.: B26D 11/00, B26D 9/00

(54) **VORRICHTUNG ZUM AUFSCHNEIDEN VON LEBENSMITTELPRODUKTEN MIT ZWEI SCHNEIDKÖPFEN**
DEVICE FOR CUTTING UP FOOD PRODUCTS, COMPRISING TWO CUTTER HEADS
DISPOSITIF POUR DECOUPER DES PRODUITS ALIMENTAIRES MUNI DE DEUX LAMES

(30) Priorität: 03.11.2000 DE 10054514
(43) Veröffentlichungstag der Anmeldung: 30.07.2003
(73) Patentinhaber: Weber Maschinenbau GmbH & Co. KG, 35236 Breidenbach (DE)
(72) Erfinder: WEBER, Günther, 17094 Zachow (DE)
(74) Vertreter: Manitz, Finsterwald & Partner GbR
(86) Internationale Anmeldenummer: PCT/EP2001/012724
(87) Internationale Veröffentlichungsnummer: WO 2002/057057

(56) Entgegenhaltungen:
- EP-A- 0 336 798
- EP-A- 0 867 263
- WO-A-00/59689
- WO-A-85/04833
- DE-U- 29 513 043
- FR-A- 2 686 776
- US-A- 5 054 345
- US-A- 5 724 874

## Beschreibung

Die Erfindung betrifft eine Vorrichtung zum Aufschneiden von Lebensmittelprodukten nach dem Oberbegriff des Anspruchs 1.

Vorrichtungen dieser Art, die auch als Slicer bezeichnet werden, sind bekannt Z.b. aus WO 00/59689-A. Es sind auch bereits Slicer im praktischen Einsatz, die zum Zwecke der Erhöhung der Schneidleistung zwei zueinander parallel verlaufende Produktzuführeinheiten aufweisen, so daß mit dem planetarisch umlaufenden und rotierend angetriebenen Schneidmesser gleichzeitig zwei Produkte aufgeschnitten werden können.

Alle derzeit bekannten Slicer besitzen lediglich einen einzelnen Schneidkopf und haben intermittierende oder kontinuierliche Zuführungen. Intermittierende Zuführungen werden in der Regel für kurze Produkte wie Rohschinken oder Käseriegel verwendet, während die kontinuierlichen Zuführungen für lange Produktstränge wie Wurst oder Kochschinken eingesetzt werden.

Intermittierende Zuführungen haben vor allem den Nachteil des Zeitverlustes und der dadurch bedingten Unterbrechung des Produktsttromes resultierend aus der im Verhältnis zur Schneidezeit jeweils sehr hohen Ladezeit.

Kontinuierliche Zuführungen haben den Nachteil, daß die Produkte gegen Ende des Schneidprozesses nicht mehr ausreichend geführt bzw. gehalten werden und dadurch bedingt im Übergangsbereich zwischen den Produkten Verluste entstehen. Außerdem gilt generell für Slicer mit nur einem Schneidkopf, daß die maximal zu schneidende Produktbreite in Abhängigkeit von dem jeweils verwendeten einzigen Schneidkopf beschränkt ist.

Ferner ist bei den bekannten Vorrichtungen dieser Art nachteilig, daß es nicht oder nur mit sehr hohem fördertechnischem Aufwand möglich ist, im Zusammenhang mit dem aufeinanderfolgenden Aufschneiden der einzelnen Produkte einen kontinuierlichen Produktestrom zu erzielen, wie er für ohne Unterbrechungen arbeitende Verpackungsmaschinen gefordert wird.

Aufgabe der Erfindung ist es, bei einer Vorrichtung der eingangs angegebenen Art die Leistungsfähigkeit bei zumindest annähernd gleichem Personaleinsatz entscheidend zu erhöhen und eine optimale Ausnutzung nachfolgender Systeme zu ermöglichen.

Erreicht wird dies durch die Erfindung vor allem durch die Merkmale des Anspruchs 1.

Die Vorteile der erfindungsgemäßen Vorrichtung, bei der bevorzugt die Produktzuführungseinheit bzw. die Produktzuführungseinheiten sowie die ihnen jeweils zugeordneten Schneidköpfe mit zugehörigen Antrieben in einer gemeinsamen Basiskonstruktion integriert sind, können hinsichtlich ihrer Arbeitsweise wie folgt dargestellt werden:

Bei gleichzeitigem Ausbringen von mindestens zwei Produktströmen, insbesondere bei der Anwendung für lange Produkte, die z.B. kontinuierlich zugeführt werden, bzw. bei denen bedingt durch die große Produktlänge die Produktwechselzeit in Relation zur Schneidzeit eine eher untergeordnete Rolle spielt, ergeben sich folgende vorteilhaften Aspekte:

Durch den Einsatz von wenigstens zwei Schneidköpfen je Vorrichtung entsteht mindestens eine Verdoppelung der maximalen Schneidbreite und somit eine Verdoppelung der Schneidleistung. Dies führt insbesondere dazu, daß beim Schneiden von Portionen mit geringer Scheibenanzahl die Kapazität der vorhandenen nachgeschalteten Systeme, z.B. der Verpackungsmaschinen, voll ausgenutzt werden kann, was bisher häufig nicht erreichbar war.

Für den Fall einer Arbeitsweise der Vorrichtung, bei der die Produktströme wechselseitig, d.h. nicht parallel ausgebracht werden, insbesondere bei der Anwendung für kurze Produkte, bei denen bedingt durch die geringe Produktlänge die Produktwechselzeit in Relation zur Schneidzeit für die Kontinuität der nachfolgenden Prozesse und somit der Gesamtleistung der Systeme einen erheblichen Nachteil darstellt, gilt folgendes:
Durch diesen wechselseitigen Betrieb bzw. das wechselseitige Ausbringen der Produktströme kommt die störende Produktwechselzeit nicht zur Auswirkung, da während der Schneidezeit des einen Schneidkopfes die Zuführung eines anderen Schneidkopfes beladen werden kann.

Dies hat wiederum zur Folge, daß zum einen in den nachgeschalteten Fördersystemen Zwischenspeichervorgänge entfallen können und zum anderen das unerwünschte und bisher nur mit großem fördertechnischem Aufwand vermeidbare Anhalten von Verpackungsmaschinen nicht mehr erforderlich ist.

Während der Gutschneidephase eines sich in einer Produktzuführeinheit befindenden Produkts kann in einer anderen Produktzuführung nicht nur ein Beschickungsvorgang, sondern auch bereits ein Anschneidevorgang unter gleichzeitiger Abführung von Schnitzeln und noch nicht brauchbaren Scheiben durchgeführt werden. Dies hat zur Folge, daß zu einem geeigneten Zeitpunkt, bei dem in der einen Zuführeinheit der bezüglich der geforderten Scheiben nicht mehr brauchbare Endbereich des aufzuschneidenden Produkts erreicht wird, der Produktvorschub gestoppt und in der anderen Produktzuführeinheit der Produktvorschub gestartet werden kann, so daß nunmehr diese neu in Betrieb genommene Einheit Scheiben gleicher Art liefert.

Durch fördertechnische Zusammenführung der von den beiden Einheiten herrührenden Scheibenströme wird dann der geforderte lückenlose Strom von Gutscheiben, d.h. ein Strom von Scheiben mit der geforderten Dicke und Größe erhalten.

Besonders interessant ist dabei, daß diese Arbeitsweise auch realisiert werden kann, wenn Produkte geringer Länge, z.B. Produkte, die kürzer als etwa 80 cm sind, aufgeschnitten werden müssen.

Ein individueller Betrieb der einzelnen Zuführeinheiten sowie der ihnen zugeordneten Schneidköpfe mit unterschiedlichen Messerdrehzahlen ermöglicht es, gleichzeitig verschiedene Produkte mit unterschiedlichen Scheibenzahlen pro Zeiteinheit aufzuschneiden und damit wiederum in Verbindung mit der entsprechenden Fördertechnik in besonders wirtschaftlicher Weise sogenannte Mischpackungen zu fertigen.

Von wesentlicher Bedeutung ist im Rahmen der Erfindung, daß bei annähernd gleichen Personaleinsatz die Gesamtleistung der Vorrichtung deutlich erhöht und die Leistungsfähigkeit bestehender nachfolgender Systeme besser ausgenutzt werden kann.

Weitere vorteilhafte Ausgestaltungen der Erfindung sind in den Unteransprüchen angegeben.

Ein Ausführungsbeispiel der Erfindung wird nachfolgend unter Bezugnahme auf die Zeichnung beispielsweise erläutert; in der Zeichnung zeigt:
- Figur 1: eine schematische Seitenansicht eines Slicers nach der Erfindung,
- Figur 2: eine Draufsicht des Slicers nach Figur 1,
- Figur 3: eine Vorderansicht des Doppelschneidkopfs des Slicers nach den Figuren 1 und 2, und
- Figur 4: eine schematische Draufsicht auf den Doppelschneidkopf nach Figur 3.

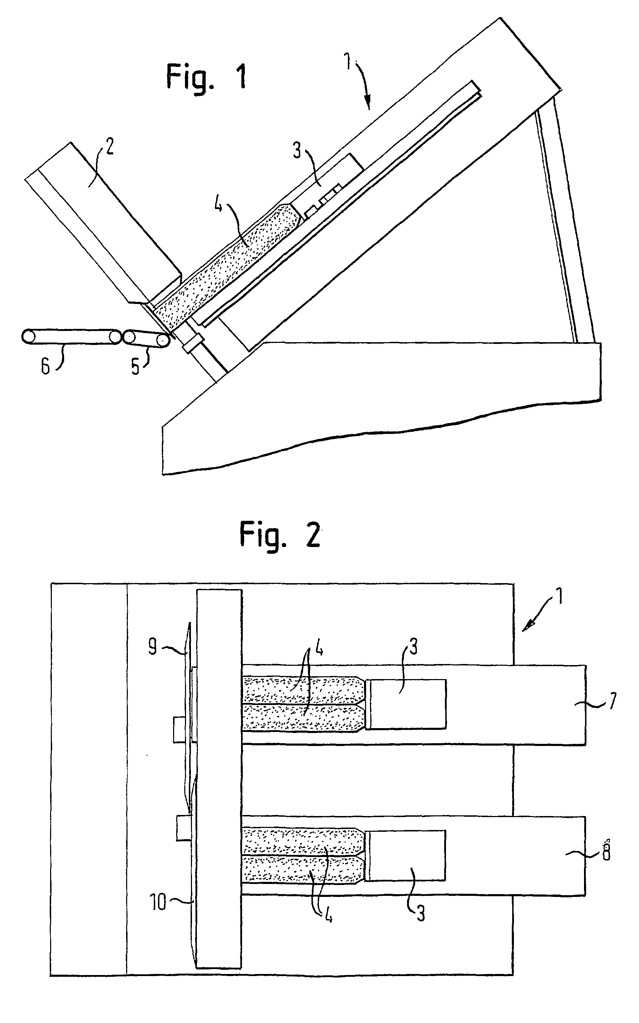

Figur 1 zeigt die Grundkomponenten eines erfindungsgemäß ausgebildeten Slicers in einer Seitenansicht, wobei die schräg zur Horizontalen verlaufende Produktzuführung 1 und das am Ende der Produktzuführung 1 vorgesehene Schneidkopfgehäuse 2 zu sehen sind. Die Produktzuführung 1 umfaßt einen oder mehrere Produkthalter 3 für aufzuschneidende Produkte 4. Zur Aufnahme der während des Schneidvorgangs gebildeten Scheiben ist ein erster, relativ kurz ausgebildeter Förderer 5 vorgesehen, dem ein Abtransportband 6 nachgeordnet ist. Weitere Förderelemente und Fördereinheiten, die zur getrennten Abführung einzelner Scheibenströme oder zur Zusammenführung von mehreren Scheibenströmen verwendet werden, sind in der Zeichnung nicht dargestellt. Derartige Fördermittel sind bekannt.

Die zur unmittelbaren Aufnahme der geschnittenen Scheiben bestimmte Fördereinheit 5 kann in Vorwärtsrichtung und in Rückwärtsrichtung betrieben werden, so daß im Rückwärtsbetrieb sich insbesondere bei Anschnittvorgängen ergebende Schnitzel oder nicht brauchbare Scheiben abgeführt werden können.

Vorzugsweise ist für jeden Schneidkopf ein individuell steuerbarer Förderer 5 vorgesehen, der zur Stapelbildung auch absenkbar ausgebildet sein kann.

Wie alle erfindungsgemäß ausgebildeten Vorrichtungen ist die in der Zeichnung dargestellte Ausführungsform mit mindestens zwei Schneidköpfen ausgerüstet, was im einzelnen in Figur 2 zu sehen ist. Jeder Schneidkopf umfaßt ein Messer 9 bzw. 10, wobei dieses Messer als Sicheloder planetarisch umlaufendes Rundmesser ausgeführt sein kann.

Vorzugsweise sind zumindest die Schneidmesser axial versetzt angeordnet, und sie können von einem gemeinsamen Antrieb oder unabhängig voneinander angetrieben werden. Die Zuführung der aufzuschneidenden Produkte 4 zu den jeweiligen Schneidköpfen kann mittels einer den Schneidköpfen gemeinsamen Produktzuführungseinheit 1 erfolgen, d.h. daß die Produkthalter 3 von einem gemeinsamen Motor angetrieben und hinsichtlich ihrer Vorschub- und Rückhubbewegungen gemeinsam betätigt werden.

In diesem Falle werden gleichzeitig mindestens zwei Produktströme ausgebracht, und diese Variante eignet sich besonders für lange Produkte, bei denen die Produktwechselzeit bezogen auf die Schneidzeit sehr gering ist.

Vor allem beim Aufschneiden kurzer Produkte, bei denen aufgrund der geringen Produktlänge die Produktwechselzeit bezogen auf die Schneidzeit relativ groß ist, wird jeder Schneideinheit eine eigene Produktzuführeinheit 7, 8 zugeordnet. In diesem Falle sind die Produktzuführeinheiten individuell ansteuerbar und es werden die Produktströme wechselseitig ausgebracht. Da dabei während der Schneidezeit eines Schneidkopfes die Zuführung eines anderen Schneidkopfes beladen wird, gelingt es auf diese Weise, jegliche störend lange Produktwechselzeit zu vermeiden. Es ist vielmehr möglich, die im wechselseitigen Betrieb entstehenden Produktströme lückenlos aneinanderzufügen.

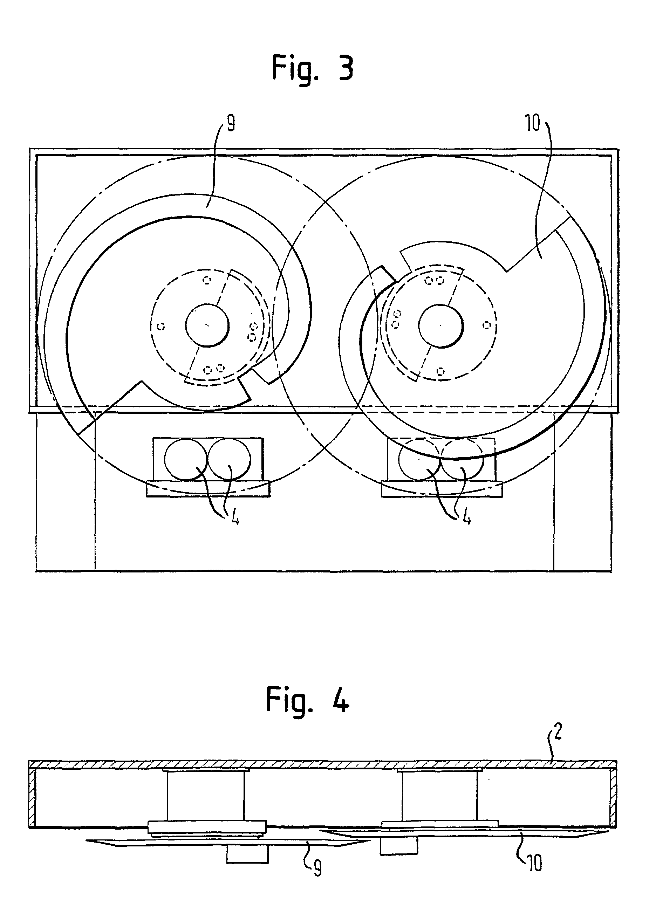

Die Vorderansicht nach Figur 3 zeigt zwei in der gleichen Vorrichtung nebeneinander angeordnete Schneidköpfe mit Sichelmessern 9, 10. Die dem jeweiligen Schneidmesser zugeführten Produkte 4 liegen innerhalb der jeweiligen Umfangs-Schneidkreise, und es ist auch zu sehen, daß die Schneidmesser der beiden Schneidköpfe in ihren Umlaufbahnen winkelversetzt zueinander laufen. Außerdem sind die Schneidmesser 9, 10 - wie insbesondere in Figur 4 ersichtlich - in Axialrichtung zueinander versetzt angeordnet.

Auch wenn im Zusammenhang mit dem Ausführungsbeispiel nur zwei Schneidköpfe gezeigt sind, versteht es sich, daß im Rahmen der Erfindung auch eine größere Anzahl von Schneidköpfen eingesetzt werden kann, die dann ebenso wie die beiden Schneidköpfe gemäß gezeigtem Ausführungsbeispiel einschließlich der ihnen zugeordneten Produktzuführeinheit bzw. der ihnen zugeordneten Produktzuführeinheiten und aller zugehörigen Antriebe in eine gemeinsame Basiskonstruktion integriert sind.

## Patentansprüche

1. Vorrichtung zum Aufschneiden von Lebensmittelprodukten (4), insbesondere Schinken, Wurst, Käse und dergleichen, mit einem Produktzuführsystem (1)und einer Schneidstation sowie der Schneidstation nachgeordneten Fördermitteln (5, 6) zum Abtransport der aufgeschnittenen Produkte (4),
das Produktzuführungssystem (1) eine Produktzuführeinheit (7, 8) für wenigstens zwei parallel zuzuführende Produkte (4) oder zumindest zwei einander benachbart angeordnete und insbesondere individuell ansteuerbare Produktzuführeinheiten (7, 8) umfasst,
**dadurch gekennzeichnet,**
**dass** die Vorrichtung mit mindestens zwei in eine gemeinsame Basiskonstruktion integrierten Schneidköpfen ausgerüstet ist, deren Messer (9, 10) als Sichelmesser oder als rotierend angetriebene und planetarisch umlaufende Rundmesser ausgeführt sind und mit jeweils einer eigenen Schneidkante zusammenwirken,
und
**dass** die von den Schneidköpfen parallel erzeugten Produktströme mittels individueller Förderer (5, 6) zu einem Produktstrom zusammengeführt und weiterverarbeitet oder in Form mehrerer Produktströme weiterverarbeitet werden.

2. Vorrichtung nach Anspruch 1,
**dadurch gekennzeichnet,**
**dass** die Produktzuführeinheiten (7, 8) hinsichtlich ihrer Vorschub- und Rückzugsbewegungen anwendungsspezifisch individuell oder gemeinsam ansteuerbar sind.

3. Vorrichtung nach Anspruch 1 oder 2,
**dadurch gekennzeichnet ,**
**dass** die Produktzuführeinheiten (7, 8) zumindest im Betrieb schräg zur Horizontalen angeordnet und vorzugsweise individuell in eine Beladeposition verschwenkbar sind.

4. Vorrichtung nach einem der vorhergehenden Ansprüche,
**dadurch gekennzeichnet,**
**dass** die den einzelnen Produktzuführeinheiten (7, 8) zugeordneten Schneidköpfe von einem gemeinsamen Antrieb angetrieben sind.

5. Vorrichtung nach einem der Ansprüche 1 bis 3,
**dadurch gekennzeichnet,**
**dass** die den einzelnen Produktzuführeinheiten (7, 8) zugeordneten Schneidköpfe jeweils einen eigenen Antrieb aufweisen.

6. Vorrichtung nach einem der vorhergehenden Ansprüche,
**dadurch gekennzeichnet ,**
**dass** die Drehzahlen der Antriebe und damit die pro Zeiteinheit vom jeweiligen Messer (9, 10) durchgeführten Schnitte unterschiedlich einstellbar und damit Portionen unterschiedlicher Scheibenzahl herstellbar sind.

7. Vorrichtung nach einem der vorhergehenden Ansprüche,
**dadurch gekennzeichnet,**
**dass** die durch die Umlaufebene der Messer (9, 10) definierten Schnittebenen der einzelnen Schneidköpfe und damit die jeweils zugeordneten Schneidkanten in Produktzuführrichtung bzw. in Axialrichtung zueinander versetzt sind.

8. Vorrichtung nach einem der vorhergehenden Ansprüche,
**dadurch gekennzeichnet,**
**dass** die Schneidmesser (9, 10) der einzelnen Schneidköpfe in ihren Umlaufbahnen winkelmäßig zueinander versetzt laufen.

9. Vorrichtung nach einem der vorhergehenden Ansprüche,
**dadurch gekennzeichnet,**
**dass** die Produktzuführeinheit (7, 8) bzw. die Produktzuführeinheiten (7, 8) sowie die ihnen jeweils zugeordneten Schneidköpfe mit zugehörigen Antrieben in einer gemeinsamen Basiskonstruktion integriert sind.

## Claims

1. An apparatus for the slicing of food products (4), in particular ham, sausage, cheese and the like, having a product supply system (1) and a cutting station as well as conveyor means (5, 6) disposed downstream of the cutting station for the transporting away of the sliced products (4),
wherein the product supply system (1) includes a product supply unit (7, 8) for at least two products (4) being supplied in parallel or at least two product supply units (7, 8) which are arranged adjacent to one another and which can in particular be individually controlled,
**characterized in that**
the apparatus is equipped with at least two cutter heads integrated in a common base construction whose knives (9, 10) are formed as sickle knives or as rotatingly driven and planetary circulating round knives and each cooperates with a respective cutting edge of its own; and **in that** the product flows generated in parallel by the cutter heads are led together by means of individual conveyor means to form one product flow and are further processed or are further processed in the form of a plurality of product flows.

2. An apparatus in accordance with claim 1, **characterized in that** the product supply units (7, 8) can be controlled individually or commonly in an application specific manner with respect to their feed movements and their retraction movements.

3. An apparatus in accordance with claim 1 or claim 2, **characterized in that** the product supply units (7, 8) are arranged obliquely to the horizontal at least in operation and can preferably be pivoted individually into a loading position.

4. An apparatus in accordance with any one of the preceding claims, **characterized in that** the cutter heads associated with the individual product supply units (7, 8) are driven by a common drive.

5. An apparatus in accordance with any one of the claims 1 to 3, **characterized in that** the cutter heads associated with the individual product supply units (7, 8) each have their own drive.

6. An apparatus in accordance with any one of the preceding claims, **characterized in that** the speeds of revolution of the drives, and thus the cuts carried out by the respective knife (9, 10) per unit of time, can be set differently and thus portions of different numbers of slices can be produced.

7. An apparatus in accordance with any one of the preceding claims, **characterized in that** the cutting plane of the individual cutter heads defined by the plane of circulation of the knives (9, 10), and thus the respectively associated cutting edges, are offset to one another in the product supply direction or in the axial direction.

8. An apparatus in accordance with any one of the preceding claims, **characterized in that** the cutting knives (9, 10) of the individual cutter heads run angularly offset to one another in their orbits.

9. An apparatus in accordance with any one of the preceding claims, **characterized in that** the product supply unit (7, 8), or the product supply units (7, 8), as well as the cutter heads respectively associated with them and having associated drives are integrated in a common base construction.

## Revendications

1. Dispositif pour découper des produits alimentaires (4), en particulier du jambon, de la saucisse, du fromage et analogues, comportant un système d'acheminement des produits (1) et une station de découpe ainsi que des moyens de convoyage (5, 6) disposés après la station de découpe pour évacuer les produits découpés (4), le système d'acheminement des produits (1) comprenant une unité d'acheminement des produits (7, 8) pour au moins deux produits (4) devant être acheminés parallèlement ou au moins deux unités d'acheminement des produits (7, 8) disposées côté à côte et pouvant en particulier être commandées individuellement, **caractérisé en ce que** le dispositif est équipé d'au moins deux tête de découpe intégrées dans une construction de base commune, dont les lames (9, 10) sont configurées sous forme de lames courbes ou sous forme de lames circulaires à entraînement rotatif et à trajectoire planétaire et coopèrent avec respectivement une propre arête de découpe, et **en ce que** les flux de produits générés parallèlement par les têtes de découpe sont rassemblés et traités au moyen de convoyeurs individuels (5, 6) pour former un seul flux de produits ou sont traités sous forme de plusieurs flux de produits.

2. Dispositif selon la revendication 1, **caractérisé en ce que** les unités d'acheminement des produits (7, 8) peuvent être commandées individuellement ou en commun en ce qui concerne leurs mouvements d'avance et de recul, de façon spécifique pour chaque cas d'application.

3. Dispositif selon la revendication 1 ou 2, **caractérisé en ce que** les unités d'acheminement des produits (7, 8) sont disposées au moins pendant le fonctionnement à l'oblique par rapport à l'horizontale et peuvent de préférence pivoter individuellement dans une position de chargement.

4. Dispositif selon l'une des revendications précédentes, **caractérisé en ce que** les têtes de découpe associées aux unités d'acheminement des produits individuelles (7, 8) sont entraînées par un entraînement commun.

5. Dispositif selon l'une des revendications 1 à 3, **caractérisé en ce que** les têtes de découpe associées aux unités d'acheminement des produits individuelles (7, 8) présentent respectivement leur propre entraînement.

6. Dispositif selon l'une des revendications précédentes, **caractérisé en ce que** les régimes des entraînements, et ainsi les découpes effectuées par unité de temps par la lame respective (9, 10), peuvent être réglés de façon variable, ce qui permet de produire des portions comprenant un nombre variable de tranches.

7. Dispositif selon l'une des revendications précédentes, **caractérisé en ce que** les plans de découpe des têtes de découpe individuelles, définis par le plan de circulation des lames (9, 10), et ainsi les arêtes de découpe respectivement associées, sont décalés les uns par rapport aux autres dans la direction d'acheminement des produits ou dans la direction axiale.

8. Dispositif selon l'une des revendications précédentes, **caractérisé en ce que** les lames de découpe (9, 10) des têtes de découpe individuelles fonctionnent dans leurs trajectoires circulaires de façon décalée d'un certain angle les unes par rapport aux autres.

9. Dispositif selon l'une des revendications précédentes, **caractérisé en ce que** l'unité d'acheminement des produits (7, 8) ou les unités d'acheminement des produits (7, 8) ainsi que les têtes de découpe respectivement associées sont intégrées avec les entraînements associés dans une construction de base commune.
